# EUROPÄISCHE PATENTSCHRIFT

(11) **EP 2 098 924 B1**
(45) Veröffentlichungstag und Bekanntmachung des Hinweises auf die Patenterteilung: **11.05.2011**
(21) Anmeldenummer: 08102394.7
(22) Anmeldetag: 07.03.2008
(51) Int. Cl.: G05B 19/042, G06F 9/44

(54) **Verfahren und Vorrichtung zum Programmieren und/oder Konfigurieren einer Sicherheitssteuerung**
Method and device for programming and/or configuring a safety controller
Procédé et dispositif adaptés à la programmation et/ou la configuration d'un contrôleur de sécurité

(43) Veröffentlichungstag der Anmeldung: 09.09.2009
(73) Patentinhaber: SICK AG, 79183 Waldkirch (DE)
(72) Erfinder: Weddingfeld, Klaus, 79183 Waldkirch (DE); Rose, Markus, 79106 Freiburg (DE)
(74) Vertreter: Hehl, Ulrich

(56) Entgegenhaltungen:
- EP-A- 1 674 953
- EP-B- 1 362 269
- WO-A-98/44399
- WO-A-2004/107067
- US-A- 5 168 441
- US-A1- 2004 032 429
- US-B1- 6 466 827

## Beschreibung

Die Erfindung betrifft ein Verfahren zum Programmieren und/oder Konfigurieren einer Sicherheitssteuerung nach dem Oberbegriff von Anspruch 1.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Dabei ist eine fehlerfreie Konfiguration und Programmierung besonders wichtig, da sonst die Anlage nicht als sicher zertifiziert wird und damit nicht oder nur eingeschränkt eingesetzt werden kann.

Aus der EP 1 362 269 B1 ist ein Programmierverfahren bekannt, bei dem Eingänge, logische Verarbeitungsregeln und Ausgänge für eine Sicherheitssteuerung konfiguriert und ein Programm für den Betrieb einer Sicherheitssteuerung mit den konfigurierten Elementen zusammengestellt wird. Bei diesem Verfahren wird aber die physische Anordnung und Verdrahtung der Elemente nicht dargestellt, so dass das herkömmliche Verfahren nicht beim physischen Aufbau der Anlage unterstützt. Zudem muss für die Auswertung jedes einzelnen Eingangs und die Ansteuerung jedes einzelnen Ausgangs ein Programmmodul ausgewählt werden, was mühsam, unübersichtlich und fehleranfällig ist.

In der noch unveröffentlichten eigenen Anmeldung unter dem Aktenzeichen EP 07013210.5 ist ein alternatives Verfahren zur Programmierung beschrieben. Dabei wird nicht nur die Auswertungslogik, sondern auch der physische Verdrahtungsplan mit einer grafischen Benutzeroberfläche erstellt. Hierbei müssen aber weiterhin unter hohem Aufwand sämtliche anzuschließenden Elemente einzeln ausgewählt, parametriert und physisch wie logisch integriert werden. Außerdem ist in einer Ausführungsform vorgesehen, eine Komplettapplikation in eine grafische Benutzeroberfläche zu laden und daraus ein Programm für die Sicherheitssteuerung erstellen zu lassen sowie einen Verdrahtungsplan auszudrucken. Dann besteht zwar die Programmierung aus einer einzigen Auswahl, dafür aber mit dem Nachteil, dass die Applikation so übernommen werden muss, wie sie ist, und nicht mehr angepasst oder erweitert werden kann.

In der WO98/4439 A2 ist ein weiteres Verfahren zur Programmierung eines sicherheitsgerichteten Steuerungssystems offenbart, welches die Auswahl von Software-Makros mit den steuerungstechnischen Regeln zur Verknüpfung von Eingängen und Ausgängen ermöglicht. Die als relativ klein beschriebenen Programmteile in den Software-Makros können dabei vorab per Simulation und Testverfahren sicher gemacht werden. Das herkömmliche Verfahren bietet aber keine Unterstützung an, die benötigten zugehörigen Sensoren und Aktoren automatisch zusammen mit einem Software-Makro auszuwählen oder zu parametrieren. Es ist auch nicht vorgesehen, die erforderlichen Eigenschaften der Steuerung automatisch anzupassen, damit die Sensoren und Aktoren überhaupt angeschlossen werden können. Entsprechend fehlt es an einer Ausgabe oder Konfigurationsmöglichkeit für die physische Verschaltung der Elemente. Lediglich die funktionelle Verbindung, also die Logikregeln für vorab auszuwählende Sensoren und Aktoren können per Software-Makro geladen werden. Das ist demnach nur ein kleiner Teilschritt, während der Großteil der Konfiguration und Programmierung von Hand auf dem Programmiergerät oder mit den Elementen der Steuerung selbst vorgenommen werden muss.

Aus der WO2004/107067A1 ist ein Verfahren für die Auswahl von Ressourcen in einem verteilten Steuerungssystem bekannt, das auf einer Abstraktion von funktionaler Programmierung und Hardwareauswahl beruht. Dazu wird zunächst rein funktional die vollständige Steuerungsfunktion definiert. Anschließend wählt das System eigenständig die für die Umsetzung der vollständigen Steuerungsfunktion erforderlichen Hardwarekomponenten aus.

Die US 6,466,827 beschreibt ein industrielles Steuerungssystem, in dessen programmierbarer Steuerung eine Vielzahl von vorkonfigurierten RLL-Elementen (Relay ladder logic) abgelegt ist. In das Steuerungsprogramm können diese RLL-Elemente eingebunden werden, um ein ähnliches Verhalten wie bei objektorientiertem Programmieren zu emulieren.

Die Norm IEC 61131 zur Programmierung von Steuerungssystemen beschreibt in IEC 61131-3 die grafische Programmierung mittels Funktionsbausteinen sowie eine IO-Schnittstellenbeschreibung in physikalisch-technischen Werten in IEC 61131-2. Die Konfiguration der Eingangs- und Ausgangsbeschaltung und deren Schnittstellen zu Sensoren und Aktoren allerdings ist nicht standardisiert.

Es ist daher Aufgabe der Erfindung, eine Möglichkeit für die Programmierung oder Konfiguration einer Sicherheitssteuerung zu schaffen, welche besonders für komplexere Sicherheitssteuerungen einfacher zu bedienen ist und Fehler vermeidet.

Diese Aufgabe wird durch ein Verfahren zum Programmieren und/oder Konfigurieren gemäß Anspruch 1 sowie ein Computerprogrammprodukt gemäß Anspruch 10 gelöst. Der Begriff Sensor soll in einem sehr weiten Sinne als allgemeiner Signalgeber verstanden werden, der nicht unbedingt Ereignisse in der Umwelt detektiert, sondern beispielsweise auch wie ein Schalter oder eine Zeitschaltuhr Signale ausgibt. Die Steuerung kann in einer kompakten Ausführungsform Teil des Anschlussmoduls sein, welches dann gleichzeitig Steuerungs- und Anschlussmodul ist, gewöhnlich ist aber ein eigenes Steuerungsmodul vorgesehen. Die Steuerung kann zentral oder verteilt sein, und zwar sowohl über mehrere Module ein und derselben Modulreihe als auch verteilt über mehrere Modulreihen, welche untereinander über Feldbus oder dergleichen kommunizieren.

Die Erfindung geht von dem Grundgedanken aus, auf einer Vielzahl von Funktionseinheiten, also Sensoren oder Aktoren, beruhende Sicherheitsanlagen für immer wieder gebrauchte Teilanwendungen zusammenzufassen. Die Konfiguration und Programmierung derartiger Standardanwendungen kann erfindungsgemäß ab Werk oder durch sehr erfahrene Bedienpersonen vorgenommen und das Ergebnis durch einfache Auswahl verfügbar gemacht werden.

Daraus ergibt sich der Vorteil, dass auch komplexe Standardanwendungen ohne besondere Qualifikation und mit äußerst geringem Aufwand in eine sicherheitstechnische Anlage eingebunden werden können. Die Teilapplikationen können bereits vorab zertifiziert sein, so dass bei einer Sicherheitsabnahme nicht mehr aufwändig die Einzelheiten, sondern allenfalls noch die einfach zu überblickende Anbindung geprüft werden muss. Die Erfindung umfasst auch die Möglichkeit, funktionsfähige und fertig eingerichtete Anwendungen mitsamt ihrem Anschlussverfahren zu speichern und als Teilapplikation für die spätere Verwendung verfügbar zu machen. Damit können auch komplexeste Anwendungen in handhabbare, modulare Bausteine unterteilt werden, so dass die Übersicht erhalten bleibt und die spätere einfache Erweiterbarkeit, aber auch die Übertragung fertiger Lösungen und Teillösungen auf andere Anlagen einschließlich einer Austauschanlage ermöglicht ist.

Der Anwender kann dank der Erfindung von einer rein funktionalen Ebene her denken, muss sich demnach lediglich noch die notwendigen Absicherungsmaßnahmen auf hohem Abstraktionsniveau überlegen. Die möglicherweise hochkomplexe konkrete Umsetzung mit Einzelbauteilen wird durch das erfindungsgemäße Verfahren auf einen rein mechanischen Nachbau der nach Auswahl und Einbindung der Teilapplikationen bereits fertigen Konfiguration durch Verbinden der vorgesehenen Sensoren und Aktoren mit den vorgesehenen Eingängen und Ausgängen reduziert.

Mit Einbindung der Teilapplikation werden zugleich Logikregeln zur Einbindung der Funktionseinheiten in die Auswertung der angeschlossenen Sensoren und die Ansteuerung der angeschlossenen Aktoren ausgewählt und/oder es werden Programmteile zur Implementierung der Logikregeln in der Sicherheitssteuerung erstellt, aktiviert und/oder verknüpft. Damit werden die Teile des Steuerungsprogramms, die zu der Teilapplikation gehören, automatisch richtig generiert, so dass hier weder Aufwand anfällt noch Fehler gemacht werden können. Das Programm mit den Auswertungsregeln für die Steuerung wird automatisch erstellt und auf Knopfdruck überspielt.

Die bisher beschriebene Lösung beginnt gedanklich mit den Sensoren und Aktoren. Aus einer etwas anderen Perspektive kann auch bei den Eingängen und Ausgängen angesetzt werden, an welche die Sensoren und Aktoren anzuschließen sind. Ob dieser Anschluss im Endeffekt auch erfolgt, ist nämlich aus Sicht der Auswertungslogik und der Steuerung selbst bei der Konfiguration noch offen. So kann etwa ein optischer Mutingsensor später durch einen induktiven Mutingsensor ersetzt werden. Die Auswertungslogik und die Module der Sicherheitssteuerung bleiben dabei dieselben. Auch in dieser Weise lassen sich Teilapplikationen einbinden, und die oben genannten Vorteile werden ebenso verwirklicht. Dabei entscheidet sich der Benutzer rein funktionell für die zu lösende Anwendung, beispielsweise ein "sequential muting", und wählt einen entsprechenden Block von logischen Auswertungsregeln, die im Extremfall auch aus nur einer Auswertungsregel bestehen kann. Erfindungsgemäß werden dann automatisch diejenigen Anschlussmodule gewählt oder ergänzt, welche die Einbindung des gewünschten Logikblocks ermöglichen. Diese Anschlussmodule können im Weiteren angezeigt und zur Konfiguration eines Verdrahtungsplans, also der konkreten Zuweisung von Funktionseinheiten zu Anschlüssen verwendet werden. In einem verkürzten, etwas weniger komfortablen, aber immer noch vollständigen Konfigurationsverfahren wird nur angegeben, welche Anschlussmodule zusammenzustecken sind, und anschließend werden die Logikregeln in ein Programm übersetzt und aufgespielt. Auch damit entsteht eine voll funktionsfähige Sicherheitssteuerung, wobei der Anwender noch für den richtigen Anschluss geeigneter Sensoren und Aktoren zu sorgen hat.

Vorteilhafterweise werden mit der Auswahl der Teilapplikation automatisch zu den logisch verknüpften Eingängen und Ausgängen gehörige Sensoren und/oder Aktoren ausgewählt und automatisch Eingängen und Ausgängen zugewiesen. In dieser Ausführungsform verschmelzen die beiden Perspektiven miteinander. Die zunächst auf Ebene der Eingänge und Ausgänge definierte Logik und Hardware, also die Anschlussmodule, werden mit konkreten Sensoren und Aktoren verknüpft. Alternativ kann man sich auf den Standpunkt stellen, dass durch Auswahl von Logikregeln ein Bild zumindest von der Art und Klasse der anzuschließenden Sensoren und Aktoren bestehen muss und somit implizit bereits durch die Festlegung von Eingängen und Ausgängen auch die Auswahl und Zuordnung von zugehörigen Sensoren und Aktoren vorgenommen wird.

Die mit der Teilapplikation festgelegten Teile des Programms und/oder der Konfiguration können bevorzugt nicht mehr verändert werden, insbesondere insoweit nicht mehr verändert werden, als die Logikregeln betroffen sind. Damit wird verhindert, dass eine möglicherweise nicht ausreichend fachkundige Bedienperson die aufeinander abgestimmten Elemente in einer Weise verändert, welche die Funktion oder Sicherheit beeinträchtigen könnten. Dies ist besonders dann wichtig, wenn die Teilapplikation zertifiziert ist, denn damit sind spätere Manipulationen ausgeschlossen. Dies betrifft in besonderem Maße die Logikregeln, die sich nur begrenzt automatisch auf Sinnhaftigkeit überprüfen lassen, wohingegen andere fehlerträchtige Manipulationen, wie nicht verschaltete Eingänge und Ausgänge, durch entsprechende Warnungen und Fehlermeldungen in ihren Auswirkungen entschärft werden können.

Bevorzugt sieht die Teilapplikation freibleibende Eingänge und/oder Ausgänge vor, welche nach der automatischen Erweiterung um die Teilapplikation zur Einbindung in das Gesamtsystem einem Anschlussmodul und/oder Logikregeln zugewiesen werden, insbesondere für die Festlegung von Freigaben und Abschaltpfaden von Aktoren. Manche Teilapplikationen sind in sich abgeschlossen und liefern unmittelbar auswertbare Ausgänge, etwa eine Pressenabsicherung als Teilapplikation mit einem Abschaltsignal als Ausgang. Dabei ist aber der abzustellende Aktor, in diesem Fall die Presse, häufig in der Konfiguration bereits vorhanden, und die Verbindung zwischen (der richtigen) Presse und dem Abschaltsignal muss hergestellt werden. Andere Teilapplikationen, wie ein noch weiter unten zu beschreibendes sequential muting, liefern als Ausgang vorverarbeitete Zwischensignale für andere Sensoren und müssen ebenfalls noch entsprechend eingebunden werden. Umgekehrt zu den Abschaltpfaden, also welches Signal welchen Aktor ausschalten soll, müssen auch häufig Freigaben konfiguriert werden, d.h. unter welchen Bedingungen darf ein Aktor weiterarbeiten oder wieder eingeschaltet werden.

Die Art und Anzahl der Anschlussmodule bei Einbindung einer Teilapplikation wird bevorzugt optimiert, insbesondere auf eine minimale Anzahl benötigter Anschlussmodule. Die ausgewählte Teilapplikation bringt die Information der von ihr benötigten Eingänge und Ausgänge mit. Am einfachsten ist, wenn zugleich auch ein oder mehrere feste zugehörige Anschlussmodule eingefügt werden. Die vorhandene Konfiguration wird aber besser ausgenutzt, wenn bisher ungenutzte Eingänge und Ausgänge von der Teilapplikation belegt werden. Dabei sind verschiedene Optimierungskriterien denkbar, beispielsweise kurze Schaltwege, größtmögliche Übersicht oder die Bildung funktioneller Gruppen. Der Spezialfall einer minimalen Gesamtzahl von Anschlussmodulen reduziert den Platzbedarf und die Kosten der Sicherheitssteuerung.

Die Teilapplikation wird vorteilhafterweise sicher gespeichert und geladen, insbesondere durch Checksummen, redundante Speicherung und/oder redundantes Auslesen. Damit wird vermieden, dass durch Übertragungs- oder Speicherfehler die Teilapplikation im Betrieb in der Sicherheitssteuerung fehlerhaft arbeiten könnte.

In der Teilapplikation sind bevorzugt auch Eigenschaften der Funktionseinheiten gespeichert, insbesondere die Anzahl der auszuwertenden Kanäle, die Art der Signale, ein Kommunikationsprotokoll für den Signalaustausch zwischen Funktionseinheit und Anschlussmodul, eine Testkonfiguration, Art und Anzahl vorhandener Anschlussklemmen und/oder eine Kennzeichnung. Beim Einfügen von Funktionseinheiten in das Programm für die Sicherheitssteuerung ist gewöhnlich eine Parametrierung erforderlich. Gemäß dieser vorteilhaften Ausführungsform ist eine solche Parametrierung bereits vorab und auf die Teilapplikation zugeschnitten vorgenommen. Einige wichtige Parameter ist die Anzahl der auszuwertenden Kanäle, also einerseits ob einkanalige oder zweikanalige Verbindungen vorgesehen sind und andererseits, wie viele Sensor- beziehungsweise Aktorpfade eine Funktionseinheit hat. Die Art der Signale und, als Oberbegriff hierzu, ein Kommunikationsprotokoll legt fest, wie Eingangssignale eines zu der Teilapplikation gehörigen Sensors beziehungsweise wie Ansteuerungen an Aktoren der Teilapplikation von der Sicherheitssteuerung physikalisch umzusetzen sind. Eine Testkonfiguration gibt an, welche Testsignale an eine Funktionseinheit gesendet werden können und welche Signale umgekehrt bei einem erfolgreichen Test zu erwarten sind. Damit kann die Sicherheitssteuerung angeschlossene Funktionseinheiten auf korrektes Arbeiten überprüfen. Art und Anzahl der vorhandenen Anschlussklemmen legt einerseits fest, welche Klemmen an Anschlussmodulen benötigt werden. Eine Kennzeichnung der Funktionseinheiten ermöglicht eine eindeutige Zuordnung der jeweiligen Funktionseinheiten über einen eigenen Namen oder eine Identifikationsnummer, zugleich kann auch eine Typbezeichnung abgelegt sein, welche der Sicherheitssteuerung einstellbare Parameter sowie bevorzugte oder voreingestellte Werte für diese Parameter angeben kann.

Die Steuerung bildet bevorzugt ein Kopfmodul und mit den Anschlussmodulen eine einzige Modulreihe. Die Steuerung fügt sich damit in das Modulkonzept ein und kann gemeinsam mit den Anschlussmodulen montiert werden. Alternativ bilden mehrere Steuerungen in je einem Kopfmodul mit Anschlussmodulen je eine Modulreihe, die untereinander über Gateways vernetzt sind, wobei eine Teilapplikation Funktionseinheiten mehrerer vernetzter Modulreihen betreffen kann. In diesem Fall können Modulreihen dezentral an jeweils benötigten Orten mit zu überwachenden Maschinen montiert werden, so dass kurze Schaltwege erreicht werden, zugleich bildet die Sicherheitssteuerung ein Gesamtsystem, welches bei Bedarf auch verteilte Auswertungen vornehmen und gemeinsam konfiguriert und programmiert werden kann.

In einer vorteilhaften Weiterbildung wird das Programm und/oder die Konfiguration sicher auf die Steuerung und die Sicherheitssteuerung übertragen, die Sensoren, Aktoren und Anschlussmodule werden in der durch die Anschlussverfahren vorgegebenen Weise miteinander verbunden, von der Sicherheitssteuerung wird geprüft, ob die Verbindungen dem Programm und/oder der Konfiguration entsprechen und/oder die Sicherheitssteuerung führt einen Test aller angeschlossenen Sensoren und Aktoren aus. Die Übertragung des Programms und/oder der Konfiguration auf die Sicherheitssteuerung erfolgt bevorzugt über eine Verbindung eines Programmiergeräts, so dass das erfindungsgemäße erstellte Programm und die Konfiguration auf Knopfdruck in der Sicherheitssteuerung implementiert wird. Die angezeigten oder ausgedruckten, der Konfiguration entsprechenden Verdrahtungspläne können anschließend ohne jegliche tiefere technische Kenntnis durch Zusammenstecken der angegebenen Anschlussmodule und physische Verbindung der Sensoren und Aktoren mit den für sie vorgesehenen Eingängen und Ausgängen in Anschlussmodulen in der Anlage umgesetzt werden. Durch Abfrage einer Kennzeichnung oder einer anderen Identifikation der angeschlossenen Funktionseinheiten an den Anschlussklemmen ihrer Anschlussmodule kann die Sicherheitssteuerung anschließend abfragen, ob die in der Anlage umgesetzte Verdrahtung der geplanten Konfiguration entspricht, und gegebenenfalls Fehlermeldungen ausgeben und eine Freigabe verweigern. Schließlich kann die Sicherheitssteuerung sämtliche auf diese Weise richtig angeschlossenen Sensoren und Aktoren durch Aufruf eines vorgesehenen Selbsttests in der jeweiligen Funktionseinheit testen und damit sicherstellen, dass die gesamte Sicherheitsapplikation fehlerfrei arbeiten wird. Die Planung und Umsetzung ist auf diese Weise ausgesprochen einfach und lässt Fehler praktisch nicht mehr zu. Durch die erfindungsgemäß einsetzbaren Teilapplikationen können auch komplexe Sicherheitsaufgaben durch Auswahl und Verbindungen nur sehr weniger Elemente einfach und rasch gelöst werden.

Bevorzugt werden nach Auswahl einer Teilapplikation die Funktionalität sinnvoll erweiternde Teilapplikationen, Sensoren und/oder Aktoren zur Auswahl und Einbindung in die Sicherheitsteuerung vorgeschlagen. Häufig sind Teilapplikationen für die Zusammenarbeit mit bestimmten anderen Teilapplikationen oder Funktionseinheiten ausgelegt. Dem Benutzer, der eine Sicherheitssteuerung programmiert oder konfiguriert, kann die weitere Auswahl durch solche Vorschläge erheblich vereinfacht werden. Dabei können umgekehrt auch mit der Teilapplikation unverträgliche Elemente von der weiteren Auswahl ausgeschlossen werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: die beispielhafte Darstellung einer Anzeige einer grafischen Benutzerober- fläche für die erfindungsgemäße Konfiguration und/oder Programmierung einer Sicherheitssteuerung;
- Fig. 2: eine rein beispielhafte logische Verknüpfung der Sensoren und Aktoren für die Auswahl und Einstellung der Auswertungsregeln für das Programm der Sicherheitssteuerung; und
- Fig. 3: eine schematische Darstellung einer modularen Sicherheitssteuerung mit angeschlossenen Sensoren und Aktoren, die erfindungsgemäß konfiguriert und/oder programmiert werden kann.

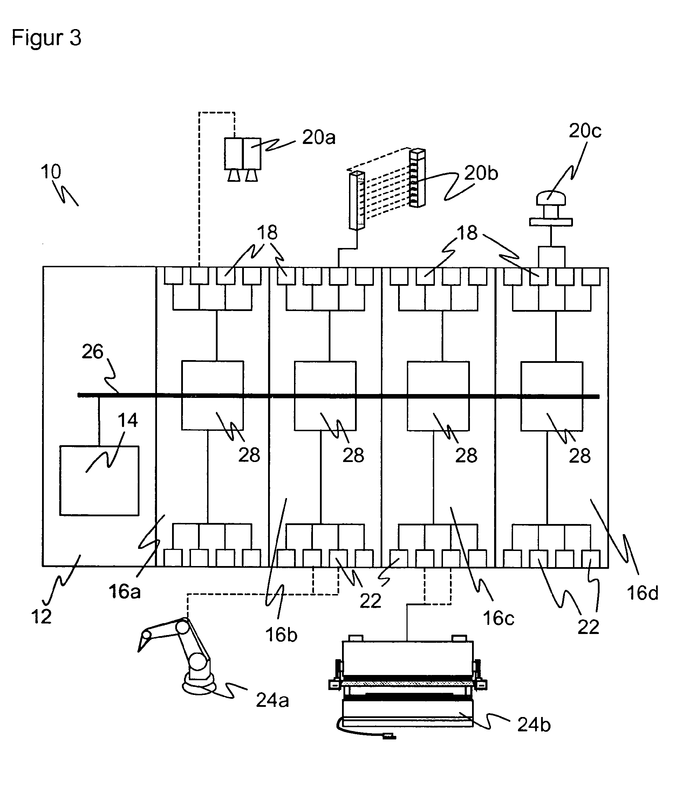

Figur 3 zeigt eine modulare Sicherheitssteuerung 10 mit einem zentralen Steuerungsmodul 12, welches eine sichere zentrale Steuerung 14 aufweist, und mit vier Anschlussmodulen 16a-d. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalters 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

Ein Roboter 24a und eine Abkantpresse 24b sind als Beispiele Bedienpersonal bei unzulässigem Eingriff gefährdender Aktoren bevorzugt zweikanalig an Ausgänge 22 angeschlossen und können somit von dem Sicherheitsschaltgerät 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Sicherheitssteuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 18 können auch Auswertungsaufgaben übernehmen oder gemeinsam mit der zentralen Steuerung 14 verteilte Auswertungen vornehmen, die von einfachen Bool'schen Verknüpfungen bis hin zu komplexen Auswertungen, etwa einer dreidimensionalen Sicherheitskamera, reichen können.

Das Sicherheitsschaltgerät 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24, und zwar alternativ über die Ausgänge 22, welche auch Abschaltsignale ausgeben können, oder auf eigene Ausgänge, so wird er nur dann wirksam, wenn die Sicherheitssteuerung 14 zustimmt, also etwa durch UND-Verknüpfung von Ansteuerung und Zustimmungssignal. Damit wird verhindert, dass die externe Anlagensteuerung eine gefährliche Situation schafft. Die externe Steuerung kann umgekehrt eine Abschaltung der Aktoren 24 nicht verhindern, da die Sicherheitsaufgaben durch die Sicherheitssteuerung 10 gesteuert werden.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe. Denkbar ist auch, dass mehrere Steuerungsmodule 12 als Kopf mehrerer Modulreihen dezentral angeordnet sind, etwa jeweils in der Nähe der zu überwachenden Teile der Gesamtanlage, die untereinander über einen Feldbus kommunizieren.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Erfindung vereinfacht die Konfiguration und Programmierung der Sicherheitssteuerung 10. Dabei wird unter Konfigurieren die Auswahl von Elementen 12, 16, 20, 24, sowie deren physische Anordnung und Verbindung beziehungsweise Verdrahtung verstanden. Programmieren ist das auf Basis von Benutzerangaben automatische Erzeugen und Zusammenfügen von der Konfiguration entsprechenden Programmteilen unter Einbeziehung logischer Auswertungsregeln, welche die Elemente 12, 16, 20, 24 miteinander verbinden, um Eingangssignale der Sensoren 20 zu Ansteuerungen an die Aktoren 24 zu verrechnen. Das Vorgeben der Logik, also der logischen Auswertungsregeln, ist eine Mischung aus Konfigurieren und Programmieren, denn der Anwender muss lediglich die logischen Verbindungsregeln vorgeben, was einer Konfiguration nahe kommt, während daraus aber erfindungsgemäß automatisch anhand der zu den Verbindungsregeln hinterlegten Programmteile das Programm für die Sicherheitssteuerung 10 generiert wird, worin eher ein Programmieren liegt. Im Folgenden wird meist vereinfachend der Begriff Konfigurieren verwendet, welcher situationsabhängig eine Programmierung einschließen soll.

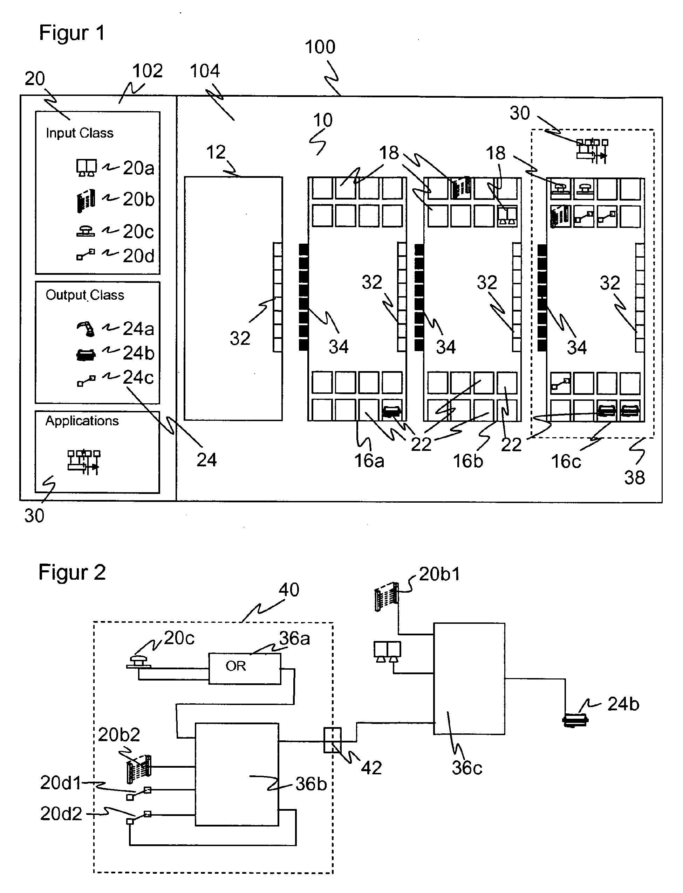

Figur 1 zeigt eine beispielhafte Anzeige 100 der grafischen Benutzeroberfläche (GUI, graphic user interface) eines nicht dargestellten Programmiergerätes zur Ausführung der erfindungsgemäßen Konfiguration einer Sicherheitssteuerung 10. Hier und im Folgenden werden gleiche Merkmale mit gleichen Bezugszeichen bezeichnet. Das Programmiergerät ist ein geeignetes Notebook, ein PC, ein PDA, ein Handy oder dergleichen mit einem Display für die Anzeige 100, einem Eingabegerät wie einer Tastatur und einer Maus und einem Prozessor zur Ausführung der Benutzeroberfläche und der Erstellung des resultierenden Konfigurationsplans, auch per Drucker, und des resultierenden Steuerungsprogramms für die Sicherheitssteuerung 10. Das Programmiergerät ist alternativ Teil der Sicherheitssteuerung 10 oder der übergeordneten Steuerung. Das Konfigurationswerkzeug, also das Programm für die grafische Benutzeroberfläche und die im Hintergrund zugehörigen Regeln zur Generierung des Steuerungsprogramms ist auf einem Speichermedium, wie einer CD oder einem USB-Stick, gespeichert. Bevorzugt ist es auch in der Sicherheitssteuerung 10 oder einer übergeordneten Steuerung gespeichert und kann von dort in einen üblichen Computer geladen und ausgeführt werden.

Anhand der Anzeige 100 wird nun beschrieben, wie ein Anwender die Konfigurierung der Sicherheitssteuerung 10 mit Hilfe der grafischen Benutzeroberfläche durchführt.

Die Anzeige 100 bietet einem linken Fenster 102 an die Sicherheitssteuerung 10 anschließbare Elemente an, nämlich Sensoren oder Eingangsklassen (input class) 20, Aktoren oder Ausgangsklassen (output class) 24 und Teilapplikationen (applications) 30. Neben der dargestellten Sicherheitskamera 20a, dem Lichtgitter 20b, einem Schalter 20c und einer Lichtschranke 20d umfassen die Eingangsklassen weitere zwei- und dreidimensionale Sicherheitskameras, Mutingsensoren, Sicherheitsmatten, Bumper, Sicherheitsschalter einschließlich Not-Aus-Schaltern, Zweihandschaltungen und weitere Geräte, die ein möglicherweise sicherheitsrelevantes Eingangssignal für die Sicherheitssteuerung 10 liefern können. Als Ausgangsklassen kommen über die dargestellten Roboter 20a, Pressen 20b und eine Lichtschranke 20c jegliche Maschinen, Roboter, Fahrzeuge, Lampen, Sirenen, aber auch Sensoren in Frage, die ein Feedback erhalten sollen, etwa zur vorübergehenden Deaktivierung (muting, blanking).

In einem rechten Fenster 104 wird die Sicherheitssteuerung 10 mit Steuerungsmodul 12 und Anschlussmodule 16a-c samt ihren Eingängen 18 und Ausgängen 22 angezeigt. Auch das Steuerungsmodul 10 kann Eingänge und/oder Ausgänge aufweisen. Das Steuerungsmodul 16 hat eine Buchse 32 und jedes Anschlussmodul eine Buchse 32 und einen Stecker 34, um die Sicherheitssteuerung 10 als mechanisch einheitliche Modulreihe zusammenstecken zu können. Die Erfindung ist darauf nicht notwendig beschränkt, denn die Module können auch physisch voneinander getrennt sein, solange sie logisch verbunden bleiben. Mit einem kleinen Icon in einem Eingang 18 oder einem Ausgang 22 wird bildlich dargestellt, mit welchem Sensor 20 oder Aktor 24 dieser Anschluss 18, 22 verbunden sein soll. Das rechte Fenster 104 zeigt somit die Konfiguration von Modulen 12, 16a-c, die angeschlossenen Sensoren 20 und Aktoren 24 sowie die Zuordnung zu bestimmten Eingängen 18 und Ausgängen 22.

Die Arbeitsschritte eines Benutzers, die zu einer solchen Konfiguration führen, sind die Folgenden: Aus den angebotenen Eingangs- und Ausgangsklassen wird ein benötigter Sensor 20 oder Aktor 24, im Folgenden manchmal zusammenfassend als Funktionseinheit 20, 24 bezeichnet, ausgewählt. In einer alternativen Ausführungsform werden ausgewählte Funktionseinheiten 20, 24 und auch Teilapplikationen 30 zunächst in einem weiteren, nicht dargestellten Fenster zwischengelagert.

Diese Funktionseinheit 20, 24 wird anschließend parametriert. Beispiele für wählbare Parameter sind die Art und Anzahl der auszuwertenden oder anzusteuernden Kanäle, ob die Kanäle ein- oder zweikanalig sind, ob eine zweikanalige Verbindung antivalent oder äquivalent auszuwerten ist, die physikalische Anordnung und Art der Anschlussklemmen, also etwa Drahtquerschnitt oder Steckertypen, Eigenschaften des Signals wie digital, analog, Ströme, Spannungen, Kapazitäten oder weitere elektrische Größen, die man als Kommunikationsprotokoll bezeichnen könnte, um anzuzeigen, dass sich Sicherheitssteuerung 10 und Funktionseinheit 20, 24 über eine gemeinsame Signal-übertragungsart einig sein müssen, eine Testkonfiguration, welche das Steuerungssignal für den Start eines Tests und eine zu erwartende Testantwort beinhalten kann, eine eindeutige Identifikation oder ein Name sowie ein Typ der Funktionseinheit 20, 24 und weitere denkbare Größen.

Nun muss ein geeignetes Anschlussmodul 16a-c ausgewählt werden. Sind nicht mehr genug Anschlüsse 18, 22 für die gewählte Funktionseinheit 20, 24 vorhanden, so muss ein weiteres Anschlussmodul 16a-c angefügt oder ein vorhandenes durch ein solches mit mehr Anschlüssen ausgetauscht werden.

Die parametrierte Funktionseinheit wird dann in das rechte Fenster 104 in einen passenden Anschluss 18, 22 eines Anschlussmoduls 16a-c gezogen. Dabei belegt manche Funktionseinheit 20, 24 mehr als einen Anschluss 18, 22, die dann entweder automatisch oder von Hand zugewiesen werden.

Nachdem somit die physische Zuordnung festgelegt ist, muss noch die logische Verknüpfung geschaffen werden. Fig. 2 zeigt eine weitere Ansicht der grafischen Benutzeroberfläche mit folgenden Funktionseinheiten: Eine dreidimensionale Sicherheitskamera 20a, zwei Lichtgitter 20b1, 20b2, ein Not-Aus-Schalter 20c, zwei Lichtschranken 20d1, 20d2 und eine Presse 24b. Diese Elemente werden mit virtuellen Logikbausteinen 36a-c verbunden, welche Auswertungsregeln repräsentieren. Beispielsweise wird zur Einbindung des Not-Aus-Schalters mit zweikanaliger redundanter Anbindung ein ODER-Baustein 36a gewählt, der dann selbst einen Eingang eines komplexeren Auswertungsbausteins 36b bildet. Die genaue Funktionsweise der exemplarisch dargestellten Logikbausteine 36b, 36c spielt im Rahmen dieser Beschreibung keine Rolle, da die gezeigten Logikregeln nur der Erläuterung dienen und nicht unbedingt ein praktisch relevantes Anwendungsbeispiel sind. Wichtig ist, dass die Elemente über vorgegebene Logikregeln 36a-c miteinander verbunden werden, um die Eingangssignale zu den für die Sicherheitsanwendung gewünschten Ansteuerungen zu verrechnen. Dazu muss jede Funktionseinheit 20, 24 mit einem oder mehreren passenden Logikbausteinen 36a-c einfach oder mehrfach verbunden werden. Das Konfigurationswerkzeug bietet dabei nur solche Verbindungen an, die mit dem jeweiligen Element auch geleistet werden, also etwa keine zweikanalige Anbindung für ein einkanaliges oder einkanalig parametrierte Funktionseinheit 20, 24.

Alle diese Schritte für die Konfiguration der physischen und der logischen Anordnung müssen für sämtliche benötigten Funktionseinheiten 20, 24 wiederholt werden, wobei natürlich die zeitliche Reihenfolge gemischt sein kann, indem beispielsweise zunächst alle Funktionseinheiten 20, 24 ausgewählt und parametriert werden.

Das Programmiergerät erstellt daraus den in der Anzeige 100 gezeigten Konfigurationsplan, der auch ausgedruckt oder auf ein sonst geeignetes Medium überspielt werden kann, und aus der grafisch entworfenen Logik ein Steuerungsprogramm durch Zusammenstellen von den Logikbausteinen 36a-c entsprechenden Teilprogrammen und Einbindung in ein Gesamtprogramm.

Mit Begriffen wie Auswählen, Verbinden und dergleichen sind im Zusammenhang mit der grafischen Benutzeroberfläche Symbole für Sensoren 20, Aktoren 24, Module 12, 16, Verbindungen, Logikelemente 36a-c und entsprechende Logikregeln über Menüs, Icons, Drag & Drop und dergleichen gemeint. Eine physische Verdrahtung folgt erst anschließend anhand des Konfigurationsplans.

Erfindungsgemäß können nun für vorgefertigte, mehrfach gebrauchte oder standardisierte Teilapplikationen 30 oder Teilfunktionen die zahlreichen genannten Einzelschritte für mehrere Funktionseinheiten 20, 24 zusammengefasst und damit erheblich vereinfacht werden. Ein Beispiel unter vielen ist ein sogenanntes "sequential muting", bei dem einige Lichtstrahlen eines Lichtgitters nacheinander stumm geschaltet werden, beispielsweise damit das erlaubte Durchfahren einer Palette mit bekannten geometrischen Eigenschaften nicht zu einem Abschaltsignal führt. Das Beispiel der Figur 2 orientiert sich hieran, ohne dass die nur exemplarisch und vereinfacht dargestellte Logik notwendig zu praktisch verwendbaren Ergebnissen führt. Ähnlich könnte die Zufuhr von Material zu einer Presse behandelt werden. Weitere Teilapplikationen sind Überwachungen bestimmter Maschinen, also von baugleichen oder ähnlichen Pressen oder Robotern, für die man immer wieder ähnliche oder gleiche Funktionseinheiten 20, 24 einsetzt.

Statt nun alle beteiligten Funktionseinheiten 20, 24 einer Teilapplikation 30 mit dem oben beschriebenen Verfahren einzeln einzubinden, kann eine passende Teilapplikation 30 ausgewählt werden. Mit einer einzigen Auswahl wird das rechte Ausgangsmodul 16c samt aller zugehörigen, fertig parametrierten Funktionseinheiten 20, 24 und aller Anschlüsse eingefügt, wie durch das gestrichelte Rechteck 38 der Figur 1 gezeigt. Auch die Logik innerhalb der Teilapplikation 30 ist bereits komplett vorgegeben, vergleiche das gestrichelte Rechteck 40 in Figur 2.

Lediglich eine Einbindung in die Gesamtapplikation ist noch erforderlich. Je nach Teilapplikation 30 kann dies in einer Festlegung der Freigaben und Abschaltpfade liegen. Figur 2 zeigt beispielhaft einen solchen noch offenen Ausgang 42 der Teilapplikation 30, 40, etwa bei einem sequential muting ein Signal, das mit demjenigen des Lichtgitters zu verrechnen ist, damit die stummgeschalteten Strahlen kein Abschaltsignal erzeugen, und das hier noch mit dem Logikbaustein 36c zu verbinden ist. Gegebenenfalls erhält die Teilapplikation 30 noch einen eindeutigen Namen, damit mehrere gleichartige Teilapplikationen 30 eingebunden werden können.

In einer Ausführungsform sind die oder einige Teilapplikationen 30 gekapselt, können also in sich nicht mehr verändert werden. Dies gilt besonders hinsichtlich ihrer Logikregeln. Teilapplikationen 30 sollen nicht nur dem erfahrenen Anwender Arbeitsschritte ersparen, sie können auch mitgeliefert und/oder zertifiziert sein, so dass spätere Änderungen gerade von weniger qualifizierten Anwendern verhindert werden. Die grafische Benutzeroberfläche lässt Zugriffe auf die Teilapplikation 30 dann nur noch im Gesamten zu, also ein Einfügen oder Löschen, nicht aber Änderungen einzelner Elemente.

Teilapplikationen 30 können nicht nur ausgewählt, sondern auch umgekehrt gespeichert werden. Dadurch wird die Bibliothek an verfügbaren Teilapplikationen 30 erweitert. Vor der Speicherung kann eine besondere Authentifizierung verlangt werden, so dass nur besonders qualifizierte Anwender diese Möglichkeit erhalten.

Für eine solche Erweiterung der Bibliothek ist auch vorstellbar, dass Teilapplikationen nicht in der grafischen Benutzeroberfläche entworfen werden. Stattdessen wird eine Gesamtkonfiguration geladen, was auch dadurch geschehen kann, dass das Programmiergerät an eine bestehende Anlage angeschlossen wird und aus dem Steuerungsprogramm der Sicherheitssteuerung 10 die Konfiguration ausliest. Dann werden Teilbereiche 38, 40 festgelegt oder bestimmte Elemente ausgewählt, die dann mitsamt ihrer Parametrierung und der untereinander festliegenden physischen und logischen Verbindungen als weitere Teilapplikation gespeichert werden. Man könnte auch eine Gesamtkonfiguration als Teilkonfiguration speichern, sofern sie dann später erweitert oder zur Erweiterung verwendet wird. Das bloße Speichern, anschließende Laden und Anwenden von Gesamtkonfigurationen ist kein erfindungsgemäßes Konfigurieren mit Teilapplikationen, da es hier an eigentlichen Konfigurationsschritten fehlt und letztlich nur eine fertige Lösung kopiert wird.

Laden und Speichern von Teilapplikationen 30 erfolgt sicher, indem mehrfach gespeichert oder ausgelesen, direkt nach dem Speichern erneut gelesen, durch Prüfsummen oder ähnliche Verfahren sichergestellt wird, dass die gespeicherte und die dargestellte Version der Konfiguration stets übereinstimmen.

In einer bevorzugten Ausführungsform ist eine Optimierung der Anschlussmodule 16a-c vorgesehen. Diese kann manuell ausgewählt oder nach jeder Auswahl einer Teilapplikation 30 automatisch aufgerufen werden. Dabei werden die Zuordnungen von Anschlüssen der Funktionseinheiten 20, 24 und der Anschlussmodule 16a-c nach vorgegebenen Optimierungskriterien modifiziert. Solche Optimierungskriterien können sein: größtmögliche Übersicht der gesamten Sicherheitssteuerung 10 mit bewusst ungenutzt gelassenen Eingängen 18 oder Ausgängen 22, Erweiterbarkeit besonders für vorhersehbar geeignete komplementäre weitere Funktionseinheiten 20, 24, die örtliche Nähe zwischen Anschlussmodul 16a-c und Funktionseinheit 20, 24, besonders im Falle eines Abschaltausgangs, eine Zusammenfassung nach inhaltlichen Kriterien, also gleichartige Funktionseinheiten 20, 24 oder Zusammenhang mit einer gemeinsamen Gefahrenquelle, etwa ein und derselben Presse 24b, und schließlich der häufige Fall einer geringst möglichen Anzahl von Anschlussmodulen 16a-c. Dabei können Anschlussmodule 16a-c ergänz, entfernt oder gegen solche Anschlussmodule 16a-c ausgetauscht werden, die eine geeignetere Anzahl und/oder Anordnung von Eingängen 18 und Ausgängen 22 aufweisen. Die genannten vorhersehbar geeigneten Funktionseinheiten 20, 24 kann die grafische Benutzeroberfläche dem Anwender auch im Rahmen der Optimierung oder unabhängig davon vorschlagen. So wird ein Muting-Sensor nicht sinnvoll ohne einen zu mutenden weiteren Sensor einzubinden sein. Ähnlich ergänzen sich auch weitere Teilapplikationen 30 nahezu zwangsläufig, häufig oder zumindest nützlich.

Werden physische Verbindungen von Funktionseinheiten 20, 24 im Rahmen einer Optimierung oder einer manuellen Änderung vertauscht, also anderen Eingängen 18 oder Ausgängen 22 desselben oder eines anderen Ausgangsmoduls 16a-c zugewiesen, so verändert sich dabei die Logik nicht. Die logischen Auswertungsregeln sind invariant gegenüber solchen Vertauschungen; sie werden bei der abschließenden Generierung des Steuerungsprogramms automatisch richtig berücksichtigt.

Eine Teilapplikation 30 kann mehrere dezentral angeordnete, aber zu einer gemeinsamen Sicherheitssteuerung 10 über Feldbus und Gateways verbundene Modulreihen betreffen. Da könnte etwa eine an der Decke montierte 3D-Kamera einerseits und ein vor einer Presse im Sichtbereich der 3D-Kamera befindliches Lichtgitter andererseits sein, etwa weil die Kamera aufgrund von Abschattungen die Presse allein nicht sicher überwachen kann. Dann ist die Teilapplikation die Pressenabsicherung, die Modulreihe für die 3D-Kamera aber direkt neben der Kamera montiert und mit einer weiteren Modulreihe in der Nähe der Presse zu einer Sicherheitssteuerung 10 verbunden.

Mit Einbindung von Teilapplikationen 30 wird eine Sicherheitsanwendung dann geplant, indem eine oder mehrere Teilapplikationen 30 und je nach Anwendung ergänzende Funktionsbausteine 20, 24 entsprechend dem oben beschriebenen Verfahren geladen und in der grafischen Benutzeroberfläche physisch und logisch verbunden werden. Die benötigten Funktionseinheiten 20, 24 sowie die benötigten Steuerungsmodule 10 und Anschlussmodule 16 können dann zusammengestellt und möglicherweise direkt über eine Maske online oder offline bestellt werden. Der Konfigurationsplan wird ausgedruckt oder anders angezeigt, und die Komponenten werden in der Werkhalle verdrahtet, ohne dass hierfür eine tiefere technische Kompetenz erforderlich wäre als das Lesen des Plans. Die in der grafischen Benutzeroberfläche konfigurierte Logik ergibt das Sicherheitssteuerungsprogramm, welches in die zentrale Steuerung 14 gespielt wird.

Die Steuerung 14 kann dann sämtliche angeschlossenen Funktionseinheiten 20, 24 nach ihrem Typ abfragen, gegebenenfalls die vorgesehenen Parameter übertragen und feststellen, ob die Anschlüsse richtig vorgenommen wurden. Diese Übertragung ist in beide Richtungen denkbar: Hin zu den Funktionseinheiten 20, 24, um letztere zu parametrieren, oder in umgekehrter Richtung von den Funktionseinheiten 20, 24 zu der Sicherheitssteuerung 10 oder dem Konfigurationswerkzeug, um eine tatsächliche Konfiguration in das Konfigurationswerkzeug einzulesen.

Für einen Test der angeschlossenen Typen von Funktionseinheiten 20, 24 müssen die Anschlüsse 18, 22 für eine entsprechende Datenkommunikation ausgebildet sein, beispielsweise über IO-Link oder ein Kommunikationsprotokoll, welches an den Anschlüssen 18, 22 die für den Datenaustausch benötigten Signale austauschen kann. Stimmen die vorgenommenen Anschlüsse nicht, so erzeugt die Steuerung 14 eine Fehlermeldung mit einem Hinweis, welche Funktionseinheiten 20, 24 beziehungsweise welche Verbindungen geändert werden müssen. Ein solcher Hinweis wird bevorzugt wieder über das Konfigurationswerkzeug angezeigt und bearbeitet. Sofern die Logik mit der vorhandenen physischen Konfiguration verträglich ist, kann die Steuerung 14 auch vorschlagen, statt der Verdrahtung das Steuerungsprogramm anzupassen. Abschließend kann die Steuerung 14 jede angeschlossene Funktionseinheit 20, 24 gemäß der Testkonfiguration testen oder zu einem Selbsttest auffordern. Danach ist die Sicherheitssteuerung 10 betriebsbereit.

Die oben für die Sicherheitssteuerung 10 beschriebenen und bei geforderter Sicherheitskategorie normierten Sicherheitsanforderungen gelten auch für die Konfiguration und Programmierung, besonders für die Generierung des Programms sowie für die Übertragung des Programms auf die Steuerung 14. Das Programmiergerät selbst darf notfalls abstürzen, da noch keine Gefahrenquellen existieren, die damit erstellte Konfiguration und das Programm dagegen müssen fehlersicher sein.

Erfindungsgemäß können Sicherheitskonzepte für modulare Anlagen in der Sicherheitssteuerung 10 modular, kundenspezifisch und einfach abgebildet und erweitert werden. Dabei werden dem Anwender durch Teilapplikationen 30 eine Vielzahl von Schritten abgenommen, womit sich die Konfiguration und Programmierung erheblich vereinfacht und fehlerfrei bleibt.

## Patentansprüche

1. Verfahren zum Programmieren und/oder Konfigurieren einer modularen Sicherheitssteuerung (10) mit einer Steuerung (14) und einem oder mehreren Anschlussmodulen (16), wobei in den Anschlussmodulen (16) Eingänge (18) zum Anschluss von Sensoren (20) und Ausgänge (22) zum Anschluss von Aktoren (24) vorgesehen sind und wobei jedes Anschlussmodul (16) mehrere Eingänge (18) für Sensoren (20) und/oder mehrere Ausgänge (22) für Aktoren (24) aufweist, wobei Logikregeln (36) zur Auswertung von Signalen an Eingängen (18) zu Ansteuerungen von Ausgängen (22) ausgewählt werden und Programmteile zur Implementierung der Logikregeln (36) in der Sicherheitssteuerung (10) erstellt, aktiviert und/oder verknüpft werden,
**dadurch gekennzeichnet,**
**dass** ein Block mit mindestens einer Logikregel (36) als Teilapplikation (30) ausgewählt und mit der Auswahl automatisch vorhandene oder zusätzliche Anschlussmodule (16) festgelegt werden, wobei die ausgewählte Teilapplikation (30) eine Information der von ihr benötigten Eingänge (18) und Ausgänge (22) mitbringt und automatisch diejenigen Anschlussmodule (16) gewählt oder ergänzt werden, welche die Einbindung des zu der Teilapplikation gehörigen Blocks ermöglichen, so dass insgesamt in der Sicherheitssteuerung (10) die durch den Block logisch verknüpften Eingänge (18) und Ausgänge (22) für den Anschluss von zu der Teilapplikation (30) gehörigen Sensoren (20) und Aktoren (24) verfügbar sind, wobei die Art und Anzahl der Anschlussmodule (16) bei Einbindung einer Teilapplikation (30) auf eine minimale Anzahl benötigter Anschlussmodule (16) optimiert wird.

2. Verfahren nach Anspruch 1,
wobei mit der Auswahl der Teilapplikation (30) automatisch zu den logisch verknüpften Eingängen (18) und Ausgängen (22) gehörige Sensoren (20) und/oder Aktoren (24) ausgewählt und automatisch Eingängen (18) und Ausgängen (22) zugewiesen werden.

3. Verfahren nach Anspruch 1 oder 2,
wobei die mit der Teilapplikation (30) festgelegten Teile des Programms und/oder der Konfiguration nicht mehr verändert werden können, insbesondere insoweit nicht mehr verändert werden können, als die Logikregeln (36) betroffen sind.

4. Verfahren nach einem der vorhergehenden Ansprüche,
wobei die Teilapplikation (30) freibleibende Eingänge (18) und/oder Ausgänge (22) vorsieht, welche nach der automatischen Erweiterung um die Teilapplikation (30) zur Einbindung in das Gesamtsystem Logikregeln (36) zugewiesen werden, insbesondere für die Festlegung von Freigaben und Abschaltpfaden von Aktoren (24).

5. Verfahren nach einem der vorhergehenden Ansprüche,
wobei die Teilapplikation (30) sicher gespeichert und geladen wird, insbesondere durch Checksummen, redundante Speicherung und/oder redundantes Auslesen.

6. Verfahren nach einem der vorhergehenden Ansprüche,
wobei in der Teilapplikation (30) auch Eigenschaften der zugehörigen Sensoren (20) und Aktoren (24) gespeichert sind, insbesondere die Anzahl der auszuwertenden Kanäle, die Art der Signale, ein Kommunikationsprotokoll für den Signalaustausch zwischen Funktionseinheit (20, 24) und Anschlussmodul (16), eine Testkonfiguration, Art und Anzahl vorhandener Anschlussklemmen und/oder eine Kennzeichnung.

7. Verfahren nach einem der vorhergehenden Ansprüche,
wobei die Steuerung (14) ein Kopfmodul (12) und mit den Anschlussmodulen (16) eine einzige Modulreihe bildet, oder wobei mehrere Steuerungen in je einem Kopfmodul mit Anschlussmodulen (16) je eine Modulreihe bilden, die untereinander über Gateways vernetzt sind, und wobei eine Teilapplikation (30) Funktionseinheiten (20, 24) mehrerer vernetzter Modulreihen betreffen kann.

8. Verfahren nach einem der vorhergehenden Ansprüche,
wobei das Programm und/oder die Konfiguration sicher auf die Steuerung (14) und die Sicherheitssteuerung (10) übertragen wird, die Sensoren (20), Aktoren (24) und Anschlussmodule (16) in der durch die Anschlussverfahren vorgegebenen Weise miteinander verbunden werden, von der Sicherheitssteuerung (10) geprüft wird, ob die Verbindungen dem Programm und/oder der Konfiguration entsprechen und/oder die Sicherheitssteuerung (10) einen Test aller angeschlossenen Sensoren (20) und Aktoren (24) ausführt.

9. Verfahren nach einem der vorhergehenden Ansprüche,
wobei nach Auswahl einer Teilapplikation (30) die Funktionalität sinnvoll erweiternde Teilapplikationen (30), Sensoren (20) und/oder Aktoren (24) zur Auswahl und Einbindung in die Sicherheitssteuerung (10) vorgeschlagen werden.

10. Computerprogrammprodukt mit einer Speichereinrichtung, welche Programmcode zum Durchführen eines Verfahrens nach einem der Ansprüche 1 bis 9 hält, wenn der Programmcode auf einem Computer ausgeführt wird.

## Claims

1. A method for programming and/or configuring a modular safety controller (10) having a controller (14) and one or more connection modules (16), wherein inputs (18) for the connection of sensors (20) and outputs (22) for the connection of actuators are provided in the connection modules (16) and wherein each connection module (16) has a plurality of inputs (18) for sensors (20) and/or has a plurality of ouputs (22) for actuators (24), wherein logic rules (36) for the evaluation of signals at inputs (18) for the actuation of outputs (22) are selected and program parts for the implementation of the logic rules (36) are generated, activated and/or linked in the safety controller (10), **characterized in that** a block having at least one logic rule (36) is selected as a partial application (30) and, by means of the selection, present connection modules (16) or additional connection modules (16) are automatically specified, wherein the selected partial application (30) carries forward an information on the inputs (18) and the outputs (22) required by it and those connection modules (16) which enable the integration of the block associated with the partial application are automatically selected or supplemented, so that all the inputs (18) and the outputs (22) logically linked by the block are available in the safety controller (10) for the connection of the sensors (20) and the actuators (24) associated with the partial application (30), wherein the type and number of connection modules (16) is optimized to a minimal number of required connection modules (16) on integration of a partial application (30).

2. A method in accordance with claim 1 wherein, by means of the selection of the partial application (30), sensors (20) and/or actuators (24) associated with the logically linked inputs (18) and outputs (22) are automatically selected and are automatically assigned to inputs (18) and outputs (22).

3. A method in accordance with claim 1 or claim 2 wherein the parts of the program and/or the configuration determined by means of the partial application (30) can no longer be changed, in particular cannot be changed to the extent that the logic rules (36) are involved.

4. A method in accordance with any one of the preceding claims
wherein the partial application (30) provides for inputs (18) and/or outputs (22) which remain free and which, following the automatic extension by the partial application (30), are allocated logic rules (36) for the implementation into the overall system, in particular are allocated for the determination of releases and shutdown paths of actuators (24).

5. A method in accordance with any one of the preceding claims
wherein the partial application (30) is reliably stored and reliably loaded, in particular by means of check sums, by a redundant save and/or by a redundant read out.

6. A method in accordance with any one of the preceding claims
wherein properties of the associated sensors (20) and actuators (24) are also stored in the partial application (30), in particular the number of the channels to be evaluated, the type of signals, a communication protocol for the signal exchange between functional unit (20, 24) and connection module (16), a test configuration, type and number of connection terminals that are present and/or an identification are stored in the partial application (30).

7. A method in accordance with any one of the preceding claims wherein the controller (14) forms a head module (12) and together with the connection modules (16) forms a single module series, or wherein a plurality of controllers, each in a head module having connection modules (16), forms a respective module series which are networked between one another via gateways and wherein a partial application (30) can involve functional units (20, 24) of a plurality of networked module series.

8. A method in accordance with any one of the preceding claims wherein the program and/or the configuration is/are reliably transferred to the controller (14) and to the safety controller (10), the sensors (20), the actuators (24) and the connection modules (16) are connected to one another in a manner defined by the connection process, wherein it is examined by the safety controller (10) whether the connections correspond to the program and/or the configuration and/or wherein the safety controller (10) carries out a test of all connected sensors (20) and actuators (24).

9. A method in accordance with any one of the preceding claims wherein following the selection of a partial application (30), partial applications (30), sensors (20) and/or actuators (24) which meaningfully increase the functionality are suggested for selection and incorporation in the safety controller (10).

10. A computer program product having a memory device which stores program codes for carrying out a method in accordance with any one of the claims 1 to 9 when the program code is carried out on a computer.

## Revendications

1. Procédé pour programmer et/ou configurer une commande de sécurité modulaire (10) comprenant une commande (14) et un ou plusieurs modules de connexion (16), où des entrées (18) pour la connexion de capteurs (20) et des sorties (22) pour la connexion d'actionneurs (24) sont prévues dans les modules de connexion (16) et où chaque module de connexion (16) comprend plusieurs entrées (18) pour des capteurs (20) et/ou plusieurs sorties (22) pour des actionneurs (24), et dans lequel on sélectionne des règles logiques (16) pour évaluer des signaux au niveau des entrées (18) et donner des signaux de pilotage au niveau des sorties (22), et des parties de programmes sont établies, activées et/ou chaînées pour mettre en oeuvre les règles logiques (36) dans la commande de sécurité (10),
**caractérisé en ce que**
on sélectionne un bloc avec au moins une règle logique (36) à titre d'application partielle (30) et avec la sélection on fixe automatiquement des modules de connexion (16) existants ou additionnels, et l'application partielle sélectionnée (30) apporte une information quant aux entrées (18) et aux sorties (22) dont elle a besoin et on sélectionne ou on complète automatiquement ceux des modules de connexion (16) qui permettent l'intégration du bloc appartenant à l'application partielle, de sorte que l'on dispose au total dans la commande de sécurité (10) des entrées (18) et des sorties (22) chaînées de façon logique par le bloc pour la connexion de capteurs (20) et d'actionneurs (24) appartenant à l'application partielle (30), et le type et le nombre des modules de connexion (16) est optimisé lors de l'intégration d'une application partielle (30) en vue de minimiser le nombre des modules de connexion (16) nécessaires.

2. Procédé selon la revendication 1,
dans lequel, avec la sélection de l'application partielle (30), on sélectionne automatiquement des capteurs (20) et/ou des actionneurs (24) appartenant aux entrées (18) et aux sorties (22) chaînées de façon logique, et les entrées (18) et les sorties (22) sont automatiquement attribuées.

3. Procédé selon la revendication 1 ou 2,
dans lequel les parties du programme et/ou de la configuration fixées avec l'application partielle (30) ne peuvent plus être modifiées, en particulier elles ne peuvent plus être modifiées pour autant que les règles logiques (36) sont concernées.

4. Procédé selon l'une des revendications précédentes,
dans lequel l'application partielle (30) prévoit des entrées (18) et/ou des sorties (22) libres qui, après agrandissement automatique à raison de l'application partielle (30) sont attribuées à des règles logiques (36) pour l'intégration dans le système total, en particulier pour fixer des libérations et des trajets de mise à l'arrêt d'actionneurs (24).

5. Procédé selon l'une des revendications précédentes,
dans lequel l'application partielle (30) est mémorisée et chargée de façon sûre, en particulier par des sommes de contrôle (checksums), par une mémorisation redondante et/ou une lecture redondante.

6. Procédé selon l'une des revendications précédentes,
dans lequel, dans l'application partielle (30) on mémorise également des propriétés des capteurs (20) et des actionneurs (24) associés, en particulier le nombre des canaux à évaluer, le type des signaux, un protocole de communication pour l'échange de signaux entre unité fonctionnelle (20, 24) et module de connexion (16), une configuration de test, le type et le nombre de bornes de connexion présentes et/ou une désignation.

7. Procédé selon l'une des revendications précédentes,
dans lequel la commande (14) comprend un module de tête (12) et forme avec les modules de connexion (16) une unique rangée de modules, ou dans lequel plusieurs commandes forment, dans un module de tête respectif avec des modules de connexion (16) une rangée de modules respectifs qui sont en réseau les uns avec les autres via des passerelles (gateways), et une application partielle (30) peut concerner des unités fonctionnelles (20, 24) de plusieurs rangées de modules en réseau.

8. Procédé selon l'une des revendications précédentes,
dans lequel le programme et/ou la configuration est transmis(e) de façon sûre à la commande (14) et à la commande de sécurité (10), les capteurs (20), les actionneurs (24) et les modules de connexion (16) sont reliés les uns aux autres de la manière prévue par le processus de connexion, et la commande de sécurité (10) vérifie si les liaisons correspondent au programme et/ou à la configuration et/ou la commande de sécurité (10) exécute un test de tous les capteurs (20) et actionneurs (24) connectés.

9. Procédé selon l'une des revendications précédentes,
dans lequel après sélection d'une application partielle (30) on propose des applications partielles (30), des capteurs (20) et/ou des actionneurs (24) qui complètent le la fonctionnalité de façon judicieuse en vue de leur sélection et de leur intégration dans la commande de sécurité (10).

10. Produit de programme d'ordinateur avec une unité de mémoire qui contient un code de programme pour mettre en oeuvre un procédé selon l'une des revendications 1 à 9 quand le code de programme est exécuté sur un ordinateur.
